# EUROPÄISCHE PATENTSCHRIFT

(11) **EP 0 791 285 B1**
(45) Veröffentlichungstag und Bekanntmachung des Hinweises auf die Patenterteilung: **15.12.1999**
(21) Anmeldenummer: 97102407.0
(22) Anmeldetag: 14.02.1997
(51) Int. Cl.: A01C 7/08

(54) **Sämaschine zum Ausbringen von Saatgut**
Sowing machine for depositing seeds
Semoir pour déposer des semences

(30) Priorität: 22.02.1996 DE 19606599
(43) Veröffentlichungstag der Anmeldung: 27.08.1997
(73) Patentinhaber: Franz Kleine Agrartechnik GmbH, 33154 Salzkotten (DE)
(72) Erfinder: Schulte, Reinhold, Dipl.-Ing., 33106 Paderborn-Elsen (DE)
(74) Vertreter: Patentanwälte Rehberg + Hüppe

(56) Entgegenhaltungen:
- EP-A- 0 570 792
- US-A- 4 227 649
- PATENT ABSTRACTS OF JAPAN vol. 017, no. 589 (C-1124), 27.Oktober 1993 & JP 05 176605 A (HOKUYOU SANGYO KK), 20.Juli 1993,

## Beschreibung

Die Erfindung bezieht sich auf eine Sämaschine zum Aussäen von Saatgut nach dem Oberbegriff des Patentanspruchs 1.

Mit einer solchen Sämaschine wird das Saatgut in parallel nebeneinander liegenden Sästreifen ausgesät, wobei in jedem Sästreifen das Saatgut gleichzeitig in mehreren parallel nebeneinander liegenden Säreihen ausgesät wird. Der Begriff Sästreifen wird hier so verwendet, daß die Breite des Sästreifens der Arbeitsbreite einer eingangs beschriebenen Sämaschine entspricht.

Es ist es bekannt, sogenannte Spurreißer zur Abgrenzung einer bereits eingesäten Fläche zu verwenden. Die Spurreißer sind außen an dem Maschinenrahmen der eingesetzten Sämaschine angeordnet. Sie greifen in das Erdreich ein und ziehen eine Linie frisch aufgeworfener Erde am äußeren Rand der bereits eingesäten Fläche. Entlang dieser Linie wird die Sämaschine geführt, wenn der nächste Sästreifen eingesät wird. Problematisch hierbei ist, daß die von den Spurenreißern geschaffenen Markierungen bei langen Schlägen oft nicht mehr erkennbar sind, wenn der nächste Sähstreifen eingesät wird. Sie sind zwischenzeitlich ausgetrocknet oder anderweitig verwittert. Darüberhinaus ist problematisch, daß die Widerstandskräfte des Bodens, in den die Spurreißer eingreifen, mit einem sehr langen Hebelarm auf die Sämaschine einwirken. Dies gilt insbesondere bei Sämaschinen mit besonders großer Arbeitsbreite. Hier besteht die Gefahr, daß die Sämaschine nicht die nötigen Gegenkräfte für die Spurreißer aufbringen kann. Dies gilt insbesondere bei der Direktsaat, d.h. beim Einsäen von Saatgut in einen an seiner Oberfläche geschlossenen Boden. Bei der Direktsaat spielt auch eine Rolle, daß der Spurreißer bei ordnungsgemäßer Funktion die geschlossene Oberfläche des Bodens aufreißt, was gerade verhindert werden soll.

Bei einer bekannten Sämaschine nach dem Oberbegriff des Patentanspruchs (ACCORD Drillmaschine der Fa. Accord Landmaschinen H. Weiste & Co. GmbH) werden Spurreißer eingesetzt, um Pflegespuren zu markieren. Pflegespuren sind für die Ausbringung von Düngern und Pflanzenschutzmitteln vorgesehen und weisen typischerweise einen deutlich größeren Abstand als die Arbeitsbreite einer Sämaschine auf. Gewünscht ist, daß auf den Pflegespuren kein Saatgut ausgesät wird. Entsprechend werden für die Pflegespuren einzelne Sägeräte der Sämaschine gezielt abgeschaltet. Bei der bekannten Sämaschine werden die Spurreißer hinter den außer Betrieb befindlichen Sägeräten abgesenkt. Durch die von den Spurreißern geschaffenen Markierungen ist es möglich, die Pflegespur bereits vor dem Auflauf des Saatguts zu erkennen und zu benutzen. Allerdings treten dieselben Probleme wie bei der Markierung der bereits eingesäten Fläche mit einem Spurreißer auf. Die durch die Spurreißer geschaffenen Markierungen sind nicht witterungsbeständig, und bei der Direktsaat führen sie zu unerwünschter Bodenerosion.

Zur Kennzeichnung von Pflegespuren ist es weiterhin bekannt, die über den Bereich der Pflegespur geführten Sägeräte intervallartig zu aktivieren, wodurch nach dem Auflauf der Saat eine auffällige unterbrochene Reihe von Jungpflanzen entsteht. Dieses Verfahren ist jedoch mit den Nachteilen verbunden, daß zum einen Saatgut in den Pflegespuren ausgebracht wird, die unter Beschädigung der Jungpflanzen mehrfach überfahren werden, und daß zum anderen die derart geschaffenen Markierungen vor dem Auflauf des Saatguts überhaupt nicht zu erkennen sind.

Beim Ausbringen von Pflanzenschutzmitteln oder Düngern ist es bekannt, zur Abgrenzung der bereits behandelten Flächen eine Schaummarkierung auf zu behandelnden Pflanzen abzulegen. Die Schaummarkierung wird durch Düsen außen an den Pflanzenschutzmittel- bzw. Düngerspritzen ausgebracht. Die Schaummarkierung hat den Nachteil, daß sie bereits bei leichtem Wind relativ schnell verweht. Darüberhinaus ist bei ausgewiesenen Pflegespuren eine Markierung der bereits mit Pflanzenschutzmitteln oder Dünger behandelten Flächen überflüssig.

Aus Patent abstracts of Japan, C -1124, October 27, 1993 Vol. 17/No.589, JP 5 - 176 605 A ist eine Vorrichtung zum Ausbringen von Pestiziden und dgl. bekannt, die zwei Farbbehälter und zwei Düsen zum Ausbringen von Farbe beiderseits des mit den Pestiziden behandelten Streifens aufweist.

Der Erfindung liegt die Aufgabe zugrunde, eine Sämaschine nach dem Oberbegriff des Patentanspruchs 1 aufzuzeigen, deren Markierung der Pflegespuren länger erkennbar ist, als bei der Verwendung eines Spurreißers.

Diese Aufgabe wird erfindungsgemäß durch die Merkmale des Patentanspruchs 1 gelöst. Vorteilhafte Ausführungsformen der Erfindung sind in den Unteransprüchen angegeben.

Mit der erfindungsgemäßen Sämaschine wird die Markierung durch Aufbringen von Farbe auf den Boden angebracht, die gegenüber Trocknung und Verwitterung weit weniger empfindlich ist als die Spur eines Spurreißers. Bei geeigneter Auswahl der Farbe ist die Markierung aus Farbe ohne weiteres bis zum Auflauf des Saatguts sichtbar. Gleichzeitig ist ein Aufbringen der Farbe bei der Direktsaat nicht mit einer Verletzung der Bodenoberfläche verbunden. So werden alle Nachteile der Verwendung eines Spurreißers durch die Markierungen aus Farbe beseitigt.

Bei der Auswahl der Farbe kommt es darauf an, daß die Farbe gut sichtbar ist und möglichst bis zum Auflauf des Saatguts nicht verwittert. Daneben darf die Farbe natürlich nicht zu einer Umweltverschmutzung oder zu einer Belastung der aus dem Saatgut erwachsenen Pflanzen fuhren. So sollte die Farbe biologisch verträglich und/oder biologisch abbaubar sein. Geeignet sind beispielsweise zugelassene Lebensmittelfarben. Eine besonders gute Umweltverträglichkeit bei extrem guter Sichtbarkeit der Markierungen ist für Farben auf der Basis von Titandioxid gegeben.

Die Farbauftrageinrichtungen sind möglichst am rückwärtigen Ende jedes Sägeräts anzuordnen. Hierdurch wird vermieden, daß die Sägeräte durch die Farbe verschmutzt werden.

Die Farbauftrageinrichtung kann die Farbe auf dem Boden aufstreuen oder über eine Rolle an den Boden abgeben. Bevorzugt ist jedoch eine Ausführungsform der Sämaschine, bei der der Farbbehälter für eine flüssige Farbe vorgesehen ist und jede Farbauftrageinrichtung eine Sprüh- oder Spritzdüse für die flüssige Farbe aufweist. Mit der Sprüh- oder Spritzdüse kann die flüssige Farbe kontaktlos und ohne das Auftreten von Widerstandskräften des Bodens aufgetragen werden. Darüberhinaus besteht bei aufgespritzter flüssiger Farbe nicht die Gefahr, daß die Farbe vor dem Auftreffen auf und dem Anhaften an dem Boden verweht. So kann die eingesetzte Farbmenge sehr effektiv genutzt werden. Im Ergebnis werden nur sehr kleine Farbmengen für die Markierungen benötigt, die bei geeigneter Auswahl der Farbe bezüglich ihrer Umweltbelastung absolut unbedenklich sind.

Als Verdünnungsmittel für die flüssige Farbe ist Wasser bevorzugt. Um bei der Verwendung von Wasser als Verdünnungsmittel eine gleichmäßige Konzentration der Farbe sicherzustellen, kann dem Farbbehälter eine Pumpe für die flüssige Farbe zugeordnet sein. Wenn zwischen dem Farbbehälter und jeder Farbauftrageinrichtung ein Ventil vorgesehen ist, kann diese Pumpe die flüssige Farbe zumindest dann umlaufend pumpen, wenn alle Ventile geschlossen sind. Hierdurch wird ein Absetzen der in der Farbe enthaltenen Farbstoffe verhindert.

Die Erfindung wird im folgenden unter Bezugnahme auf die beigefügten Zeichnungen näher erläutert und beschrieben, dabei zeigt
- Figur 1: schematisch einen Einsatz der neuen Sämaschine und
- Figur 2: eine Ausführungsform der neuen Sämaschine.

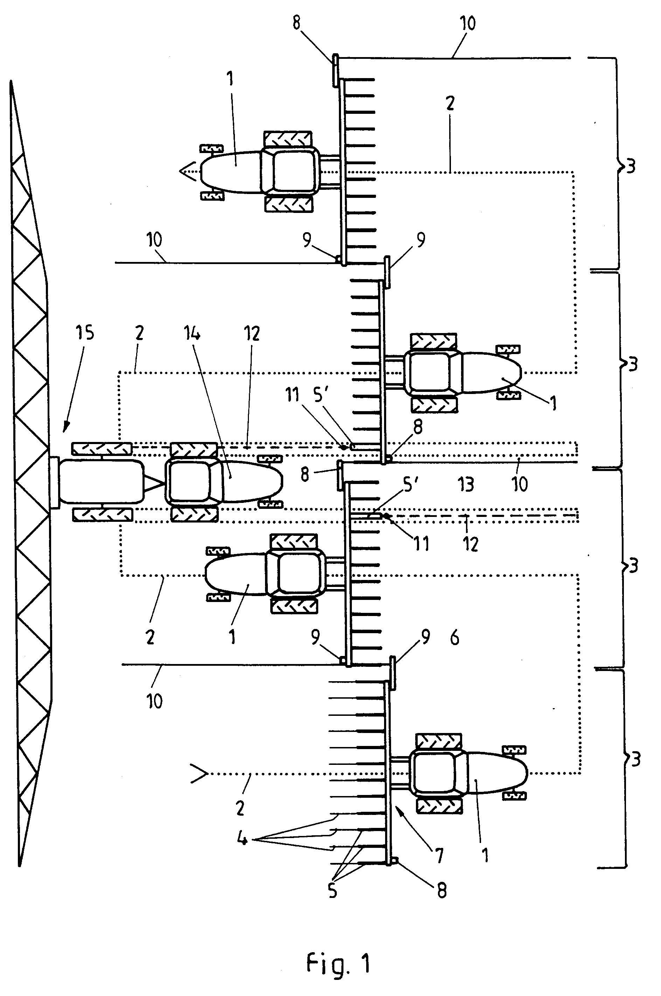

In Figur 1 ist der Weg 2 eines Schleppers 1 beim Aussäen von Saatgut angedeutet. Der als punktierte Linie wiedergegebene Weg 2 hat einen meanderförmigen Verlauf. Ausgesät wird das Saatgut jedoch nur über die langen parallel zueinander verlaufenden Geradenabschnitte des Wegs 2. Jeder lange Geradenabschnitt des Wegs 2 entspricht einem Sästreifen 3. Jeder Sästreifen 3 ist in eine Mehrzahl von Säreihen 4 unterteilt, die bei der untersten Darstellung des Schleppers 1 angedeutet sind. Jede Säreihe entspricht einem Sägerät 5, das an dem Maschinenrahmen 6 einer Sämaschine 7 angehängt ist. Die Sämaschine 7 wird von dem Schlepper 1 gezogen. Die Sämaschine 7 gemäß Figur 1 weist 12 nebeneinander angeordnete Sägeräte 4 auf. An den äußeren Enden des Maschinenrahmens 6 der Sämaschine 7 sind ausklappbare Farbauftrageinrichtungen 8 und 9 angeordnet, wobei in der Fahrtrichtung des Schleppers 1 gesehen die Farbauftrageinrichtung 8 rechts und die Farbauftrageinrichtung 9 links angeordnet ist. Mit den Farbauftrageinrichtungen 8 und 9 wird wechselweise eine Markierung 10 aufgebracht, die zur Abgrenzung der bereits eingesäten Fläche dient. Hierzu wird die der bereits eingesäten Fläche abgekehrte Farbauftrageinrichtung ausgeklappt und mit der Farbauftrageinrichtung wird Farbe auf den Boden aufgespritzt. Die Markierung 10 dient dazu, die Sämaschine 7 genau auszurichten, wenn sich der Schlepper 1 auf dem nächsten langen Geradenabschnitt seines Wegs 2 befindet. Die Markierung 10 wird gemäß Figur 1 so angebracht, daß sie genau die Säreihe des innersten Sägeräts 5 beim Einsäen des nächsten Sästreifens 3 vorgibt. Weitere Farbauftrageinrichtungen 11 sind hinter jedem Sägerät 5 vorgesehen. In Figur 1 sind jedoch nur die aktiven Farbauftraggeräte 11 in Form jeweils eines Punkts wiedergegeben. Die beiden aktiven Farbauftrageinrichtungen 11 bringen Farbe auf den Boden auf, um Markierungen 12 zu schaffen. Die Markierungen 12 kennzeichnen eine Pflegespur 13, in deren Bereich die umrandet gezeichneten Sägeräte 5' gezielt deaktiviert werden. Die Pflegespur 13 wird genutzt, um beispielsweise Pflanzenschutzmittel auszubringen. Dies ist in Figur 1 durch eine von einem Schlepper 14 gezogene Pflanzenschutzmittelspritze 15 mit großer Arbeitsbreite angedeutet. Nach dem Auflaufen des Saatguts ist die Pflegespur 13 leicht an dem doppelten Abstand der sie begrenzenden Säreihen erkennbar. Vor dem Auflauf dienen die Markierungen 12 zur Kennzeichnung der Pflegespur 13.

Für die Markierung 10 reicht eine Farbe aus, die nicht besonders verwitterungsfest ist. Sie muß nur so lange sichtbar sein, daß auch bei sehr langen Geradenabschnitten des Wegs 2 die vorhergehende Markierung 10 noch sicher erkannt wird. Für die Markierung 12 sollte jedoch eine Farbe verwendet werden, die über einen größeren Zeitraum auch bei Witterungseinflüssen auf dem Boden erkennbar bleibt. Geeignet sind insbesondere Farben auf der Basis von Titandioxid. Titandioxid hat eine auffällig weiße Farbe, die auch bei Dunkelheit im Scheinwerferlicht gut erkannt wird. Titandioxid verwittert selbst nicht. Durch die Verwitterung des Bodens geht aber auch die Sichtbarkeit einer Markierung auf der Basis von Titandioxid mit der Zeit verloren. Im übrigen ist Titandioxid bezüglich seiner Umweltauswirkungen unbedenklich. Es ist beispielsweise als Lebensmittelfarbe zugelassen. Außerdem reichen geringste Mengen Titandioxid zum Anbringen einer gut sichtbaren und ausreichend dauerhaften Markierung 10 bzw. 12 aus. Zur Unterscheidbarkeit der beiden Markierungen 10 und 12 können diese aus unterschiedlichen Farben ausgebildet werden oder ein unterschiedliches Linienmuster aufweisen. In Figur 1 sind unterschiedliche Linienmuster angedeutet, wobei die die Markierung 10 wiedergebende Linie durchgezogen und die die Markierung 12 wiedergebende Linie gestrichelt ist. Dennoch kann die Markierung 12 eine größere Witterungsbeständigkeit aufweisen, wenn die hierfür verwendeten Farbmengen größer sind.

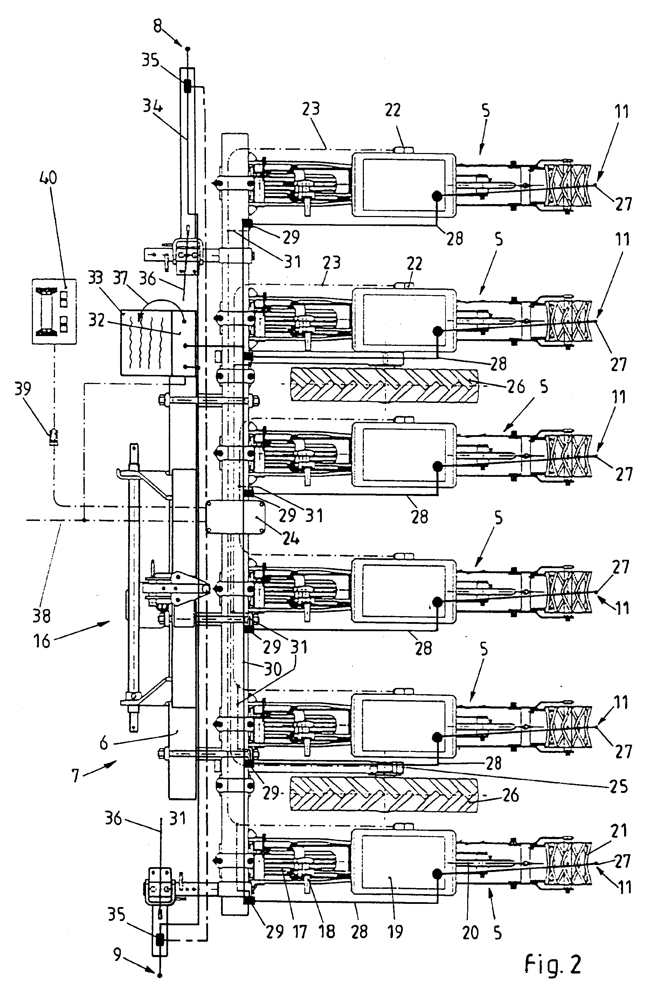

Figur 2 gibt schematisch den Aufbau der Sämaschine 7 in den erfindungswesentlichen Bestandteilen wieder. Der Maschinenrahmen 6 weist ein Dreipunktlager 16 zur Befestigung an dem hier nicht dargestellten Schlepper 1 auf. An dem Maschinenrahmen 6 sind die Sägeräte 5 gelagert, wobei eine Verschiebbarkeit der Sägeräte 5 entlang der quer zur Arbeitsrichtung verlaufenden Haupterstreckungsrichtung des Maschinenrahmens 6 gegeben ist, um unterschiedliche Säreihenabstände einzustellen. Jedes Sägerät 5 weist in bekannter Weise ein Stützrad 17, eine Höheneinstellvorrichtung 18, einen Behälter 19 für das Saatgut, ein dem nicht sichtbaren Säschar nachgeordnetes Eindrückrad 20 und eine Schließwalze 21 für den vom Säschar geöffneten Boden auf. Die Abgabe des Saatguts wird bei den Sägeräten 5 durch separat ansteuerbare Motoren 22 bewirkt. Jeder Motor 22 ist über eine Steuerleitung 23 mit einer Steuereinrichtung 24 verbunden. Über die Steuerleitungen 23 können die Motoren 22 in ihrer Umdrehungsgeschwindigkeit geregelt und auch völlig inaktiviert werden. Als Eingangssignal berücksichtigt die Steuereinrichtung das Signal eines Wegimpulsgebers 25, der an eines der beiden Stützräder 26 des Maschinenrahmens 6 angekoppelt ist. Am rückwärtigen Ende jedes Sägeräts 5 ist eine hier punktförmig dargestellte Spritzdüse 27 angeordnet, die Bestandteil der Farbauftrageinrichtungen 11 ist. Die Spritzdüsen 27 stehen über Stichleitungen 28 und Ventile 29 mit einer Versorgungsleitung 30 für flüssige Farbe in Verbindung. Die Ventile 29 werden über Steuerleitungen 31 gesteuert, die von den Steuerleitungen 23 abzweigen. Ein von der Steuereinrichtung 24 stammendes Signal, das einen Motor 22 inaktiviert, öffnet ganz oder in Intervallen das zu demselben Sägerät 5 gehörige Ventil 29, woraufhin die nachgeschaltete Spritzdüse 27 Farbe senkrecht von oben auf den Boden spritzt. Die Versorgungsleitung 30 für flüssige Farbe wird von einer Pumpe 32 aus einem Farbbehälter 33 gespeist, der auf dem Maschinenrahmen 6 angeordnet ist. Die Pumpe 32 versorgt auch eine zweite Versorgungsleitung 34 für flüssige Farbe, die zu den Farbauftrageinrichtungen 8 und 9 vorgeschalteten Ventilen 35 führt. Die Farbauftrageinrichtungen 8 und 9 sind über Seilzüge 36 hochklappbar. Wenn keines der Ventile 29 und 35 geöffnet ist, pumpt die Pumpe 32 die flüssige Farbe über einen Rücklauf 37 in den Farbbehälter 33 zurück und verhindert auf die Weise ein Absetzen von Farbstoffen in dem als Trägerflüssigkeit für die Farbe verwendeten Wasser. Zu der Steuereinrichtung 24 und der Pumpe 32 führt eine Stromversorgung 38 von dem hier nicht dargestellten Schlepper 1. Die Steuereinrichtung 24 ist darüberhinaus über einen Verbindungsstecker 39 mit einer Bedieneinheit 40 auf dem Schlepper verbunden. Über die Bedieneinheit 40 ist beispielsweise der gewünschte Abstand von Pflegespuren 13 gemäß Figur 1 vorgebbar.

### BEZUGSZEICHENLISTE

- 1: - Schlepper
- 2: - Weg
- 3: - Sästreifen
- 4: - Säreihe
- 5: - Sägerät
- 6: - Maschinenrahmen
- 7: - Sämaschine
- 8: - Farbauftrageinrichtung
- 9: - Farbauftrageinrichtung
- 10: - Markierung
- 11: - Farbauftrageinrichtung
- 12: - Markierung
- 13: - Pflegespur
- 14: - Schlepper
- 15: - Pflanzenschutzmittelspritze
- 16: - Dreipunktlager
- 17: - Stützrad
- 18: - Höhenverstelleinrichtung
- 19: - Saatgutbehälter
- 20: - Eindrückrad
- 21: - Schließwalze
- 22: - Motor
- 23: - Steuerleitung
- 24: - Steuereinrichtung
- 25: - Wegimpulsgeber
- 26: - Stützrad
- 27: - Spritzdüse
- 28: - Stichleitung
- 29: - Ventil
- 30: - Versorgungsleitung
- 31: - Steuerleitung
- 32: - Pumpe
- 33: - Farbbehälter
- 34: - Versorgungsleitung
- 35: - Ventil
- 36: - Seilzug
- 37: - Rücklauf
- 38: - Stromversorgung
- 39: - Verbindungsstecker
- 40: - Bedieneinheit

## Patentansprüche

1. Sämaschine (7) zum Aussäen von Saatgut mit einem Maschinenrahmen (6), mit an dem Maschinenrahmen nebeneinander angeordneten Sägeräten (5) und mit einer Steuereinrichtung (24) die einzelne Sägeräte zur Festlegung von Pflegespuren (13) deaktiviert und Einrichtungen zum Markieren der Pflegespuren (13) an den deaktivierten Sägeräten aktiviert, **dadurch gekennzeichnet**, daß die Einrichtungen zum Markieren der Pflegespuren einen Farbbehälter (33) und an jedem Sägerät (5) eine mit dem Farbbehälter (33) verbundene Farbauftrageinrichtung (11) aufweisen und daß die Steuereinrichtung (24) die den deaktivierten Sägeräten (5) zugeordneten Farbauftrageinrichtungen (11) aktiviert.

2. Sämaschine nach Anspruch 1, **dadurch gekennzeichnet**, daß die Farbauftrageinrichtungen (11) an dem rückwärtigen Ende des jeweiligen Sägeräts (5) vorgesehen sind.

3. Sämaschine nach Anspruch 1 oder 2, **dadurch gekennzeichnet**, daß jeder Farbbehälter für eine flüssige Farbe vorgesehen ist und daß jede Farbauftrageinrichtung (11) eine Sprüh- oder Spritzdüse (27) für die flüssige Farbe aufweist.

4. Sämaschine nach Anspruch 3, **dadurch gekennzeichnet**, daß jedem Farbbehälter (33) eine Pumpe (32) für die flüssige Farbe zugeordnet ist, daß zwischen dem Farbbehälter (33) und jeder Farbauftrageinrichtung (11) ein Ventil (29) vorgesehen ist und daß die Pumpe (32) die flüssige Farbe zumindest dann umlaufend pumpt, wenn alle Ventile (29) geschlossen sind.

## Claims

1. Sowing machine (7) for depositing seeds, comprising a machine frame (6), sowing devices (5) arranged side by side on the machine frame, and a control means (24) which deactivates single sowing devices for determining tending tracks (13) and which activates means for marking the tending tracks (13) at the deactivated sowing devices, **characterized in that** the means for marking the tending tracks comprise a paint container (33) and a paint apply means (11) at each sowing device (5) connected with the paint container (33), and in that the control means (24) activates the paint apply means (11) allocated to the deactivated sowing devices (5).

2. Sowing machine according to claim 1, **characterized in that** the paint apply means (11) is provided at the back side of each sowing device (5).

3. Sowing machine according to claim 1 or 2, **characterized in that** every paint container is designed for a liquid paint, and in that each paint apply means (11) comprises a spray or squirt nozzle (27) for the liquid paint.

4. Sowing machine according to claim 3, **characterized in that** a pump (32) for the liquid paint is allocated to every paint container (33), in that a valve is provided between the paint container (33) and each paint apply means (11), and in that the pump (32) for the liquid paint pumps the paint in circulation, at least, if all valves (29) are closed.

## Revendications

1. Semoir (7) pour déposer des semences, comportant un châssis de machine (6) avec des dispositifs d'ensemencement (5) disposés côte à côte sur le châssis de la machine et avec une installation de commande (34) qui désactive certains dispositifs d'ensemencement pour la définition de traces d'entretien (13) et qui active des dispositifs pour le marquage des traces d'entretien (13) sur les dispositifs d'ensemencement désactivés, caractérisé en ce que les dispositifs pour le marquage des traces d'entretien présentent un réservoir de colorant (33) et un dispositif d'apposition de colorant (11) relié au réservoir de colorant (33) sur chaque dispositif d'ensemencement et en ce que l'installation de commande (24) active les dispositifs d'apposition de colorant (11) assignés aux dispositifs d'ensemencement désactivés (5).

2. Semoir suivant la revendication 1, caractérisé en ce que les dispositifs d'apposition de colorant (11) sont prévus à l'extrémité arrière du dispositif d'ensemencement (5) correspondant.

3. Semoir suivant la revendication 1 ou 2, caractérisé en ce que chaque réservoir de colorant est prévu pour un colorant liquide, et en ce que chaque dispositif d'apposition de colorant (11) présente un ajutage de pulvérisation ou de projection (27) pour le colorant liquide.

4. Semoir suivant la revendication 3, caractérisé en ce qu'à chaque réservoir de colorant (33) est assignée une pompe (32) pour le colorant liquide, en ce qu'entre le réservoir de colorant (33) et chaque dispositif d'apposition de colorant 11 est prévue une vanne (29) et en ce que la pompe (32) fait circuler le colorant liquide tout au moins lorsque toutes les vannes (29) sont fermées.
